(19) Europäisches Patentamt

European Patent Office

Office européen des brevets

(11) Veröffentlichungsnummer: **0 331 999 B1**

(12) **EUROPÄISCHE PATENTSCHRIFT**

(45) Veröffentlichungstag der Patentschrift: **04.08.93**

(21) Anmeldenummer: **89103379.7**

(22) Anmeldetag: **27.02.89**

Die Akte enthält technische Angaben, die nach dem Eingang der Anmeldung eingereicht wurden und die nicht in dieser Patentschrift enthalten sind.

(51) Int. Cl.⁵: **C08F 212/12**, C08L 27/06, C08L 55/02, //(C08F212/12, 220:44),(C08L27/06,25:16), (C08L55/02,25:16)

(54) **Copolymerisat aus Alpha-Methylstyrol und Acrylnitril und Verfahren zu seiner Herstellung.**

(30) Priorität: **05.03.88 DE 3807233**

(43) Veröffentlichungstag der Anmeldung: **13.09.89 Patentblatt 89/37**

(45) Bekanntmachung des Hinweises auf die Patenterteilung: **04.08.93 Patentblatt 93/31**

(84) Benannte Vertragsstaaten: **DE ES FR GB IT NL**

(56) Entgegenhaltungen: US-A- 4 294 946 US-A- 4 427 832 US-A- 4 755 576 US-A- 4 791 162

(73) Patentinhaber: **BAYER AG**

**W-5090 Leverkusen 1 Bayerwerk(DE)**

(72) Erfinder: **Zabrocki, Karl Dr. Edelfalter 33 W-4044 Büttgen(DE)** Erfinder: **Lindner, Christian, Dr. Riehler Strasse 200 W-5000 Köln 60(DE)** Erfinder: **Koch, Otto, Dr. Haferkamp 3 W-5000 Köln 80(DE)** Erfinder: **Braese, Hans-Eberhard, Dipl.-Ing. Käthe-Kollwitz-Strasse 3 W-5000 Köln 71(DE)**

**Beschreibung**

Copolymerisate aus α-Methylstyrol und Acrylnitril, im folgenden auch als AMS-Harze bezeichnet, werden als thermoplastische Mischpartner in ABS-Kunststoffen und diversen Blends eingesetzt.

Aus der US-PS 3 644 577 ist bekannt, die Eigenschaften von Polyvinylchlorid (PVC) durch den Zusatz von AMS-Harzen in Richtung höherer Wärmestandfestigkeit, verbesserter Verarbeitbarkeit und geringerer Durchlässigkeit für Gase zu verändern.

Die EP-A 0 042 106 beschreibt ähnliche Polymergemische, die zusätzlich Pfropfpolymerisate mit bestimmtem chemischem Aufbau enthalten. Hierbei wird das AMS-Copolymerisat in Emulsion hergestellt und als Latexgemisch mit dem Pfropfsystem sprühgetrocknet. Damit modifiziertes PVC ist für Abflußrohre für Heißwasser einsetzbar.

Übliche AMS-Copolymerisate neigen jedoch in Mischung mit PVC zu thermischem Abbau und zu Verfärbungen, was diese Mischungen für viele Verwendungen unbrauchbar macht. Es hat daher Versuche gegeben, durch spezielle Reaktionsbedingungen den Aufbau des AMS-Harzes so zu verändern, daß dieser Nachteil behoben wird.

So hat man in der US-PS 3 491 071 ein Suspensionsverfahren entwickelt, bei dem die Polymerisation der beiden Monomeren unter Druck und mit einer angeschlossenen Entgasung zur Befreiung von Restmonomeren abläuft. Wegen des großen Aufwandes ist dieser Prozeß einer konventionellen Emulsionspolymerisation unterlegen.

Ähnliches gilt für die in EP-A 0 107 795 beschriebene Masse- bzw. Suspensionspolymerisation, bei der man zudem mit sehr speziellen und schwer zugänglichen difunktionellen Peroxiden arbeiten muß.

Die EP-A 0 044 097 beschreibt ein Emulsionspolymerisationsverfahren zur Herstellung von AMS-Harzen, bei dem durch eine bestimmte Temperaturführung ein wenig wärmeverformbares Copolymerisat entsteht. Dieses Material neigt jedoch zu thermischer Verfärbung, insbesondere in Kombination mit PVC.

Aus der EP-A 0 041 703 ist ein Polymerisationsverfahren bekannt, bei dem durch Einhaltung bestimmter Konzentrationen an Acrylnitril im Reaktionsgemisch restmonomerenarme Produkte mit geringer thermischer Verfärbung zugänglich sind. Diese zeigen jedoch in Kombination mit anderen Polymeren, z.B. Pfropfkautschuken, nur mäßige Zähigkeit; bei höheren Verarbeitungstemperaturen bilden sich Oberflächenstörungen.

In der DE-OS 3 128 370 wird die Herstellung farbstabiler, wärmeformbeständiger AMS-Harze beschrieben, wobei das Molverhältnis α-Methylstyrol/Acrylnitril bis zu einem Umsatz von 90 % bei 1,3:1 bis 3,0:1 gehalten wird. Die Polymerisation hört bei etwa 97 % auf, so daß hohe Mengen Restmonomere zurückbleiben; dadurch ist die Wärmeformbeständigkeit von Mischungen geringer. Ferner geben diese Harze bei thermischer Belastung erhebliche Mengen an Ausdampfprodukten ab, wie im "fogging"-Test nach DIN-Entwurf 75 201 bzw. vorläufiger ISO-Norm 6452 nachzuweisen.

DE-OS 3 431 194 gibt ein Emulsionspolymerisationsverfahren zur Herstellung von AMS-Harzen an, bei dem durch Einhaltung bestimmter Monomerverhältnisse über dem Umsatz gut auspolymerisierte Produkte mit geringer Verfärbungsneigung speziell in ABS-Systemen zugänglich werden. Für den Einsatz in PVC reicht die Thermostabilität der Materialien jedoch nicht aus.

Die US-PS 4,294,946 lehrt ein Verfahren zur Emulsionspolymerisation von α-Alkylstyrol und einem ungesättigten Nitril im Gewichtsverhältnis 65:35 bis 80:20, worin man das gesamte α-Alkylstyrol und einen Teil des Nitrils polymerisiert, dann das restliche Nitril zugibt und erneut polymerisiert. Ziel ist hier, den α-Alkylstyrol-Gehalt im Copolymerisat zu erhöhen und dadurch die Wärmeformbeständigkeit von dieses Copolymerisat enthaltendem ABS zu verbessern.

Es wurde gefunden, daß durch eine spezielle Emulsionspolymerisation ein AMS-Harz zugänglich ist, welches in Kombination mit anderen Polymeren, insbesondere PVC, hervorragend thermo- und farbstabile Legierungen liefert und außerdem hohe Wärmeformbeständigkeit sowie gutes Fogging-Verhalten zeigt.

Das erfindungsgemäße AMS-Harz erhält man durch radikalisch initiierte Zulauf-Copolymerisation eines Gemisches von 30 bis 32 Gew.-Teilen Acrylnitril und 68 bis 70 Gew.-Teilen α-Methylstyrol in Gegenwart eines carboxylgruppenhaltigen Emulgators, wobei die Polymerisation so geführt wird, daß vor dem Zulauf-Beginn der Monomeren ein Saatlatex eines gleichen oder analogen Copolymerisats vorgelegt wird, die Reaktionstemperatur zwischen 75 und 82 °C gehalten wird und das Molverhältnis von Emulgator zu Initiator zwischen 4 und 6 liegt.

Das so hergestelle AMS-Harz hat bevorzugt Molekulargewichte von $5 \times 10^4$ bis $5 \times 10^5$, besonders bevorzugt $10^5$ bis $2 \times 10^5$ (viskosimetrische Bestimmung nach Angew. Makromol Chemie 2 (1969), S. 16-34).

Prinzipiell sind alle zur Emulsionspolymerisation bekannten Techniken zur Herstellung der erfindungsgemäßen Copolymerisate geeignet. Als besonders günstig hat sich folgendes Vorgehen herausgestellt:

Eine wäßrige Flotte in einem gerührten Reaktor wird in einer Menge von 150 - 300 Gew.-% (bezogen auf die polymerisierende Monomermenge) vorgelegt; sie enthält das Emulgiersystem, den Saatlatex sowie gegebenenfalls einen Regler. Nach Erwärmen der Vorlage auf die Polymerisationstemperatur von 75 bis 82°C setzt man den Initiator zu und dosiert danach in 4 bis 7 Stunden das Monomergemisch, setzt gegebenenfalls weiteren Initiator zu und läßt ausreagieren. Der erhaltene Harzlatex wird, gegebenenfalls nach Abmischung mit weiteren Polymer-Latices sowie gegebenenfalls nach Zusatz von Zuschlagstoffen in bekannter Weise koaguliert, gewaschen, getrocknet und thermoplastisch weiterverarbeitet.

Als Emulgatoren kommen anionische, Carboxylgruppenhaltige in Betracht, z.B. Harzseifen, Fettsäureseifen und Alkalisalze synthetischer, oberflächenaktiver Carbonsäuren; hiervon sind Harzseifen, d.h. disproportionierte und isomerisierte Abietinsäurederivate besonders bevorzugt.

Als Initiatoren dienen wasserlösliche Systeme, z.B. Persulfate und Perphosphate; besonders bevorzugt sind Persulfate, von denen das Kaliumperoxodisulfat die günstigsten Produkteigenschaften erzeugt.

Als Regler zur Einstellung der Molgewichte benutzt man Organoschwefel-Verbindungen, von denen langkettige Mercaptane, z.B. n- und tert.-Dodecylmercaptan bevorzugt sind. Die Regler werden zweckmäßig im Monomergemisch gelöst.

Emulgatoren, Initiatoren und Regler können ebenfalls in der wäßrigen Flotte vergelegt oder auch separat als weitere Zuläufe über die Polymerisationszeit dosiert werden.

Die Umsetzungstemperatur muß erfindungsgemäß bei 75 bis 82°C liegen, wobei ihre genaue Lage innerhalb dieses Bereiches sich nach den technischen Möglichkeiten zur Abfuhr der Polymerisationswärme richtet. Temperaturen unterhalb 75°C verlangsamen die Reaktion zu stark, bei Temperaturen oberhalb 82°C werden die gewünschten Molgewichte nicht erreicht und der Endumsatz geht zurück. Um sowohl hohes Molgewicht als auch geringen Restmonomerengehalt zu erzielen, hat es sich bewährt, die Temperatur über etwa 3/4 der Monomerdosierzeit niedriger, z.B. bei 77°C konstant zu halten und im letzten Viertel sowie in der anschließenden Zeit zum Ausreagieren auf z.B. 80°C zu erhöhen. Bei dieser Temperaturführung dürfen 82°C nicht überschritten werden. Man erreicht dann Endumsätze von > 97 %, in der Regel > 98 %.

Die Einhaltung dieser Bedingungen ist für die Qualität des hergestellten AMS-Harzes kritisch.

Erfindungsgemäß setzt man in das wäßrige Polymerisationsmedium einen Saatlatex ein, der vorzugsweise ebenfalls erfindungsgemäß hergestellt wurde. Die Menge des Saatlatex liegt bei 0,1 bis 3,5, vorzugsweise 1,0 bis 2,0 Gew.-% (fest/fest) der Gesamtmenge des herzustellenden AMS-Harzes. Als Saatlatex sind auch Copolymerisate einsetzbar, in denen das $\alpha$-Methylstyrol ganz oder teilweise durch Styrol ersetzt ist.

Besonders bevorzugt sind Saatlatices, bei denen der mittlere Teilchendurchmesser der Polymerisatteilchen, gemessen durch Trübungsmessung, kleiner als 110 nm ist.

Für die Polymerisation setzt man in der Regel 0,2 bis 1,0 Gew.-%, vorzugsweise 0,3 bis 0,8 Gew.-% Initiator und 1,5 bis 3,0 Gew.-%, vorzugsweise 2,0 bis 2,8 Gew.-% Emulgator ein (Mengen bezogen auf 100 Gew.-Teile resultierendes AMS-Harz). Art und Menge dieser beiden Komponenten werden so bemessen, daß ein Molverhältnis Emulgator zu Initiator von 4 bis 6 resultiert. Dieses Molverhältnis ist - über die bekannten Gesetzmäßigkeiten der Emulsionspolymerisation hinaus - von entscheidener Wichtigkeit für die technische Qualität der AMS-Harze. Bleibt man unterhalb des genannten Verhältnisses, so wird die Polymerisation langsam, hohe Umsätze stellen sich nicht ein und das Produkt verfärbt bei thermischer Belastung. Überschreitet man das Verhältnis, so steigt der "fogging" Wert stark an.

Die erfindungsgemäß erhaltenen AMS-Harzemulsionen können nach bekannten Verfahren weiterverarbeitet werden. Beispielsweise können sie, gegebenenfalls nach Zusatz von Zuschlagsstoffen wie Stabilisatoren, Antioxidanzien, Alterungsschutzmitteln alleine oder nach Vermischung mit anderen Lataces, z.B. Pfropfkautschuken, koaguliert, gewaschen, entwässert und getrocknet werden, so daß pulverförmige Massen entstehen. Diese Pulver können mit anderen Polymeren, insbesondere PVC und Weichmachern, mit üblichen Mischtechniken, z.B. auf Schnecken, Knetern und Kalandern vereinigt werden, wobei übliche Kunststoff-Zuschläge wie Farbmittel, Gleimittel, Antistatika, Hilfsstoffe sowie Füll- und Verstärkerstoffe zugesetzt werden können. Die End-Formung zu Gebrauchsgegenständen ist dann mit bekannten Techniken z.B. der Folien- oder Spritzgußverarbeitung möglich.

Beispiele und Vergleichsversuche

Hier soll gezeigt werden, daß nur innerhalb der erfindungsgemäßen Lehre die gewünschte Kombination der technischen Eigenschaften erreicht wird. Sämtliche Mengenangaben sind Gewichtsteile. Der End-Umsatz wurde durch gravimetrische Analyse bestimmt. Der Fogging-Wert wurde nach DIN 75 201 (Entwurf), der Vicat-Wert nach DIN 53 460, Methode B, Aufheizung 50 grd/min bestimmt, wobei das AMS-Harz hierzu auf einer Walze bei 190 grd. mit 0,4 Gew.-Teilen eines Gleitmittels (Loxiol G 70) compoundiert und zu einem Fell ausgezogen wurde.

Beispiel:

In einem Reaktor wurden vorgelegt:
3868 Teile entsalztes Wasser
42 Teile Harzseife als Emulgator
42 Teile 1 n Natronlauge
119 Teile eines AMS-Harz-Latex (Saatlatex)
Die Vorlage wurde auf 80°C geheizt und unter Rühren eine Lösung von
7,7 Teilen Kaliumpersulfat in
300 Teilen entsalztem Wasser zugesetzt
über 5 Stunden wird ein Gemisch aus
1625 Teilen $\alpha$-Methylstyrol
731 Teilen Acrylnitril und
1,8 Teilen tert.-Dodecylmercaptan
unter ständigem Rühren zodosiert. Nach Dosierende gibt man eine wäßrige Lösung von 1 Teil Kaliumperoxodisulfat zu und rührt 4 Stunden bei 80 - 82°C nach.

Nach dem Abkühlen wird der Latex stabilisiert und mit einer Salzlösung wird üblich ausgefällt. Man erhält nach dem Waschen und Trocknen ein pulverförmiges Polymer, das in bekannter Weise zu Kunststoff-Legierungen verarbeitbar ist.

Bei den Vergleichsversuchen wurde die vorbeschriebene Rezeptur gemäß Tab. 1 verändert; die Produkt-Eigenschaften sind ebenballs in Tab. 1 vermerkt.

4

Vergleich erfindungsgemäßes Beispiel und Vergleichsversuche

Tabelle 1

| Beispiel 1 | Beisp. 1 | Vergleichsvers. a | b | c | d | e | f | g | h |
|---|---|---|---|---|---|---|---|---|---|
| Emulgator-Menge | 42 | 30 | 42 | 42 | 42 | 58,9 | 70,7 | 82,5 | 42 |
| Saatlatex-Vorlage (Feststoff) | 42,8 | 42,8 | -- | 42,8 | 42,8 | 42,7 | 42,7 | 42,7 | 42,7 |
| Acrylnitril-Vorlage | ---- | ---- | -- | 22 | ---- | ---- | ---- | ---- | ---- |
| Dosiermenge AMS | 1625 | → | → | → | → | 1615 | → | → | → |
| Dosiermenge ACN | 731 | → | → | 709 | 800 | 722 | → | → | → |
| Umsatztemperatur | 80° C | → | 70° C | 80° C | 80° C | 80° C | 80° C | 80° C | 85° C |
| Molverhältnis Emulgator/Initiator | 4,53 | 3,24 | 4,53 | 4,53 | 4,53 | 6,45 | 7,75 | 9,00 | 4,53 |
| End-Umsatz (%) | 98,6 | 95,5 | 99,2 | 99,4 | 93,9 | 97,4 | 98,3 | 92,8 | 86,4 |
| Fogging-Wert DIN 75201 (Entw.) | 94 | 0 | 0 | 0 | nicht gepr. | 91 | 90 | 90 | 0 |
| Vicat-Wert VSTB/50 | 116 | 115 | 117 | 113 | " | 103 | 106 | 98 | 93 |

AMS = α-Methylstyrol
ACN = Acrylnitril

Patentansprüche

1. Verfahren zur Herstellung von α-Methylstyrol-Acrylnitril-Copolymerisaten, dadurch gekennzeichnet, daß man ein Gemisch von 30 bis 32 Gew.-Teilen Acrylnitril und 68 bis 70 Gew.-Teilen α-Methylstyrol in Gegenwart eines carboxylgruppenhaltigen Emulgators, durch radikalisch initiierte Zulaufpolymerisation

EP 0 331 999 B1

polymerisiert, wobei vor dem Zulauf-Beginn der Monomeren ein Saatlatex eines $\alpha$-Methylstyrol-Acrylnitril-Copolymerisats vorgelegt wird, die Reaktionstemperatur zwischen 75 und 82°C gehalten wird und das Molverhältnis von Emulgator zu Initiator zwischen 4 und 6 liegt.

2.  Copolymerisat hergestellt nach dem Verfahren des Anspruchs 1.

3.  Verwendung des Copolymerisats gemäß Anspruch 1 als Modifikator für Kunststoffe.

4.  Verwendung des Copolymerisate gemäß Anspruch 1 als Modifikator für ABS und für PVC.

## Claims

1.  A process for the production of $\alpha$-methyl styrene/acrylonitrile copolymers, characterized in that a mixture of 30 to 32 parts by weight acrylonitrile and 68 to 70 parts by weight $\alpha$-methyl styrene is polymerized by radical-initiated inflow polymerization in the presence of a carboxyfunctional emulsifier, a seed latex of an $\alpha$-methyl styrene/acrylonitrile copolymer being initially introduced before addition of the monomers is commenced, the reaction temperature being kept between 75 and 82°C and the molar ratio of emulsifier to initiator being between 4 and 6.

2.  A copolymer produced by the process claimed in claim 1.

3.  The use of the copolymer claimed in claim 1 as a modifier for plastics.

4.  The use of the copolymer claimed in claim 1 as a modifier for ABS and for PVC.

## Revendications

1.  Procédé de production de copolymères d'alpha-méthylstyrène et d'acrylonitrile, caractérisé en ce qu'on polymérise un mélange de 30 à 32 parties en poids d'acrylonitrile et de 68 à 70 parties en poids d'alpha-méthylstyrène en présence d'un émulsionnant porteur de groupes carboxyle, par polymérisation par amenée, déclenchée par des radicaux, de façon telle qu'avant le début de l'amenée des monomères, on introduit préalablement un latex d'ensemencement d'un copolymère alpha-méthylstyrène-acrylonitrile, on maintient la température de réaction entre 75 et 82°C et le rapport molaire de l'émulsionnant à l'initiateur se situe entre 4 et 6.

2.  Copolymère obtenu par le procédé suivant la revendication 1.

3.  Utilisation du copolymère suivant la revendication 1 comme modificateur pour matières plastiques.

4.  Utilisation du copolymère suivant la revendication 1 comme modificateur pour ABS et pour PVC.

6